(19) Europäisches Patentamt / European Patent Office / Office européen des brevets

(11) EP 1 912 508 B1

(12) EUROPEAN PATENT SPECIFICATION

(45) Date of publication and mention
of the grant of the patent:
**19.12.2012 Bulletin 2012/51**

(51) Int Cl.:
*A21D 10/04* (2006.01)  *A21D 8/02* (2006.01)
*A23L 3/3409* (2006.01)

(21) Application number: **06769448.9**

(22) Date of filing: **14.07.2006**

(86) International application number:
**PCT/NO2006/000278**

(87) International publication number:
**WO 2007/011236 (25.01.2007 Gazette 2007/04)**

(54) **BATTER COMPOSITION, METHOD FOR ITS PRODUCTION AND USES THEREOF**

DÜNNFLÜSSIGE TEIGZUSAMMENSETZUNG, VERFAHREN ZU SEINER HERSTELLUNG UND SEINE VERWENDUNGEN

COMPOSITION DE PATE, PROCEDE DE PRODUCTION ET D'UTILISATION

(84) Designated Contracting States:
**AT BE BG CH CY CZ DE DK EE ES FI FR GB GR HU IE IS IT LI LT LU LV MC NL PL PT RO SE SI SK TR**

(30) Priority: **15.07.2005  NO 20053469**

(43) Date of publication of application:
**23.04.2008  Bulletin 2008/17**

(73) Proprietor: **Tine BA**
**0133 Oslo (NO)**

(72) Inventor: **STEINBEKKEN, Ole Kristian**
**N -2110  Slastad (NO)**

(74) Representative: **Lillegraven, Rita et al**
**Zacco Norway AS**
**Patent Department**
**Haakon VII's gt. 2**
**P.O. Box 2003 Vika**
**0125 Oslo (NO)**

(56) References cited:
EP-A1- 0 097 038  EP-A1- 1 249 170
WO-A-01/10228  WO-A-01/35751
WO-A-01/67870  WO-A-02/11544
WO-A-98/14065  WO-A-2004/107866
CA-A1- 2 542 489  GB-A- 2 145 634
US-A- 4 022 917  US-A- 4 353 932
US-A- 6 165 524  US-A1- 2004 151 809
US-A1- 2005 037 124  US-B1- 6 391 366
US-B1- 6 531 175

• DATABASE WPI Week 200404 Derwent Publications Ltd., London, GB; AN 2004-038800 XP002403085 & JP 2003 325144 A (EZAKI GLICO CO LTD) 18 November 2003 (2003-11-18)

## Description

The present invention concerns a batter composition, a process for, the production of the batter composition and uses of such a composition. The invention concerns especially a fluid to semi-fluid preparation which is suitable for making flour food products such as waffles, pancakes, muffins, sugar bread, sponge cake, pre-made layers for layer-cake, etc., and wherein the swelling properties of the flour have been maintained in the semi-liquid or liquid preparation.

Background for the invention.

There is previously known preparations which are meant as a basis for producing flour products like the ones mentioned supra. Mainly such preparations are offered as dry matter compositions since it previously has been problematic to produce such fluid products being storage stable, not being the subject of relatively fast quality reduction in the form of e.g. separation, oxidation and/or rancidifaction, and which additionally provide tasteful and appealing end products. Additionally, especially fluid or liquid food compositions to a larger extent than dry matter compositions will be subjected to bacteria, mould or fungus attacks, which very easily may lead to destruction of the composition.

Dry matter compositions have few or none of these drawbacks, but it is necessary to add to dry matter compositions fluids or liquids in the form of milk, water, butter/fat [liquid or melted] etc., something which in some cases is unavailable (e.g. when camping if the water quality at any given location is poor and it is far to the nearest food store, etc.). Furthermore, the addition of fluids/liquids will open for erroneous measurements (it is added e.g. too much fluid/ liquid so that it becomes impossible to make the relevant product with the erroneously measured batter), and when the relevant compositions have been made from the dry matter mixtures, they ought to be used within a short time since the final batter is the subject of quality reduction in the form of such reactions and microorganism attacks as indicated supra.

Also, dry matter compositions require mixing with liquids in a suitable bowl or receptacle by the final user. This represents a further inconvenience since the mixing tools as well as the receptacle(s) will have to be cleaned after use, and this is in many cases, such as when camping, very inconvenient and laborious. With a ready made batter (pancake, waffle, muffins, etc.) it is possible to avoid using receptacles, bowls and tools altogether, since it will be possible to pour the batter directly into e.g. the frying pan or the waffle iron. This thus represents a further progress within the art and an advantage of the food precursor composition according to the present invention.

Thus there is a need for storage stable and fluid/liquid ready-made food precursor materials providing tasteful and appealing end products of the type being indicated supra.

In the present disclosure the expression "a fluid or liquid food precursor composition" is used. One of the purposes behind using this expression is to indicate that the compositions according to the present invention are to be used as an intermediate product for making the final end food product. The batter/composition according to the present invention thus is made of original food products (e.g. milk, eggs, sugar, flour, butter, etc.), but is not meant to be consumed as such, but is meant to be further processed (e.g. by frying, heating, etc.) to the final end product (e.g. waffles, pancakes, gravy, sauces, etc.).

Also, it is to be remarked, with respect to the present invention, that it should be distinguished between dough and batter where the former has a much more solid structure (e.g. for making bread) and the latter is quite fluid/liquid with flowing properties. In this respect the water activity of the product is to be noted. Also, the presence and amount of the ingredients has an impact on the final properties of the end product. For instance, the presence of butter or the swelling properties of the flour or batter influences the properties of the end product. This may be observed by comparing end products such as Belgian waffles as compared to French waffles, where the former are thick, crispy and fluffy, whereas the latter are thin and soft. The same is relevant for e.g. pancakes.

Prior art.

From US patent 3.970.763 it is known a type of batter which is suitable for a cake mix to be used to make Victoria sandwich or pound cake. Such a batter is rather firm (like batter for doughnuts), and has poor flowing properties. It is not suitable as a composition for waffles or pancakes. Additionally, a batter according to this prior art has a low water activity (below 85%) [the water activity being defined as a number between 1,00 for pure water and 0,00 for a completely dry substance, the water activity (aw) being defined by the equation $aw = P/PO = HER/100$ wherein $P$ = the partial vapor pressure of water in a food sample at a temperature T; $PO$ = the saturation vapor pressure of pure water at a temperature T; HER = relative humidity at a temperature T (equilibrium relative humidity)]. Also, when producing this type of batter, it is included a swelling substance (baking powder). This is to ensure the swelling of the final product, whereas, according to the present invention, it is preferred to rely on the swelling properties of the flour itself, and also to add an inert gas into the batter to ensure swelling that way. Also a batter according to this prior art is added a stiffening agent (e.g. gelatin), and a storage time is indicated to stiffen or set the mix, thus reducing its flowability.

From WO 2004/107866 it is known a liquid dough (batter) with a water activity (Aw) of less than 0,9 (90%). The pastry to be made from this type of dough is also indicated to be solid cakes (e.g. fruit cake, snack or stuffed bread), and not softer types of products such as waffles, pancakes, gravy or sauces. Also for reducing the water activity of the batter to below the indicated value of 90% it is indicated in this prior art to include carbohydrates and additionally it is added fat in an amount of from 20% to 30% which makes a rather heavy dough with respect to its content of lipids, i.e. its high fat content.

From EP patent 1 532 862 it is known a liquid batter for preparing pancakes, waffles, brownies, muffins etc. with a water activity above 95% forming a flowable product. To stabilize such a batter it is indicated that it be heat-treated at a temperature within the interval from 60°C to 72°C, preferably at 67°C. A drawback of heating such a batter to the high temperature range of 72° is that although this temperature allows the batter to be homogenized, the eggs in the batter will congeal, and no remedy is mentioned for this problem (except the addition of an external preservative such as an organic acid, e.g. malic acid and/or potassium sorbate). Although it will be possible to make pancakes with such a batter as this one, the pancakes will be brittle and thick, and they will be rather bland in their taste on account of the missing sugar in the batter.

US patent 6.391.366 discloses a ready-to-cook, complete, frozen, reduced density, farinaceous batter which is plastic at frozen temperatures and can be scooped to form cooked goods, especially for food service preparation of baked muffins. The batter provided by the present invention differs from the batter of US 6.391.366 in that entrained carbon dioxide is present.

GB 2145634 discloses entrapment of an inert gas in a liquid batter in order to improve stability. Carbon dioxide is not mentioned in GB 2145634.

There is thus room for a liquid batter of the kind disclosed according to the present invention, which has a water activity of more than 95%, which includes eggs and sugar (in addition to the other ingredients disclosed infra), where the inclusion of sugar makes it possible to heat the egg fraction to 72°C without the eggs congealing in the process. Also the liquid batter according to the present invention will form a batter that will swell without any external swelling agent having been added to the batter (this is, however, not saying that it is not *possible* to optionally add external swelling agent to the present batter).

Thus there exists a need for a storage-stable and liquid pre-made batter composition providing tasteful and appealing end products of the type mentioned supra, and which additionally provides a ready-to-use batter which avoids the inconvenience with tools and utensils that have to be cleaned after use.

General disclosure of the invention.

According to the present invention there is provided a batter, as described in claim 1, comprising a portion of polysaccharides in the form of flour, giving the product consistency and additionally providing the product with a swellability when fried. Relevant polysaccharides will be starch (e.g. from cereals in the form of wheat, barley, rye, potato, corn (maize), tapioca and corresponding flour compositions), dextrins, guar gums, xanthan gums, LGB ("Locust Bean Gum"), carrageenan etc.. The relevant polysaccharides will preferably be water-soluble. The polysaccharide portion of the food precursor product according to the invention will lie within the interval 3-50%, more preferred 10-50%, even more preferred 30-45%, most preferred 35-42%, especially 38-40% calculated from the weight of the end product. The indicated percentages of polysaccharide will depend on what kind of end product that is to be produced. Determination of the exact amount of polysaccharide may be done by the person skilled in the art without any extensive experimentation.

In connection with the batter product according to the present invention, there may alternatively be used a flour product without gluten, with a reduced content of gluten or where the gluten has been removed to produce a product being suitable for persons with gluten allergy or with gluten sensitivity.

The part of "polysaccharide" in the end product according to the invention, does not in this connection include mono-, di- or oligosaccharides that are added the end product as sweeteners (see infra).

The batter product according to the present invention furthermore comprises edible fat/oil in the form of fatty acids with a chain length of 8-40 C-atoms, more preferred 10-35 C-atoms, especially 15-30 C-atoms. As examples of such types of fat/oil there may be mentioned stearic acid, palmitic acid, but also natural fat/oil compositions comprising vegetable and/or animal fat/oils such as butter oil, however preferred are vegetable fats/oils or fat/oil compositions such as soy oil, rape oil, olive oil, linen-seed oil, sunflower oil etc. Such fat/oil types may also be hydrogenated/hardened fats/oils.

The fat/oil types that are used in the present invention may be saturated or unsaturated ones. It will also be possible to include or add fish oils or fish oil products such as omega-3 fatty acids or derivatives thereof, e.g. hardened or de-flavored derivatives thereof. An example of usable oil from fish is natural or processed (e.g. de-odorized) cod liver oil. Alternatively, also non-caloric fats may be included in the product according to the present invention.

The selection of the type of fat/oil will also depend on the wanted taste of the end product, and may easily be determined based on the knowledge of the person skilled in the art. The ratio of the fat/oil part of the end product according to the invention lies within the interval 3-20%, more preferred 5-15%, even more preferred 7-13%, e.g. 8% calculated from the weight of the end product. This makes the product according to the present invention a much leaner product than the products according to the prior art.

By "fat" it is in the present circumstances meant added fat/oil, and it is in this connection not included fat that optionally is added through the milk product. If there is added fat, the total amount of fat in the end product according to the invention, will increase accordingly.

Furthermore, the batter product according to the present invention comprises proteins in the form of eggs and/or egg fractions. Eggs will, in the present connection, in addition to conveying taste and consistency to the end product, also function as a stabilizer/emulsifier. Phospholipids may inter alia possess this function. Especially components such as lecithin will be particularly suited as an ingredient in the batter, product according to the invention. Eggs or egg products may also be present in the form of a dry product, and it may also be used egg fractions such as added egg white or yolk, all based on the wanted taste and consistency of the final food product. The selection of the amount of eggs and/or egg fractions may easily be determined by the person skilled in the art based on the present disclosure. The amount of eggs in the end product according to the invention will lie within the interval up to 15%, preferred 5-10%, e.g. 8% calculated on the basis the weight of the end product.

The addition of eggs to the composition according to the present invention is preferably, but not exclusively done through the addition of heat treated (pasteurized) eggs or egg fractions. In this connection it is noteworthy that the addition of sugars (e.g. glucose, sucrose, mannose, maltose, fructose etc.) will provide an opportunity to heat the egg fraction to above 72°C without coagulating or congealing the eggs. This is advantageous since egg proteins are required to form a binding matrix when the batter subsequently is fried or heated making it possible to form a batter which may be pasteurized at high temperatures without the risk of the batter congealing, and still obtain a fluid/liquid batter (e.g. for pancakes or waffles).

A batter product according to the present invention may alternatively be produced without egg proteins for providing a product being suitable for persons with egg allergies.

Consequently, it may additionally be produced a special food precursor product without any egg proteins or gluten being suitable for persons with allergies. The raw materials in such a product may then be different types of starches (see supra) providing the wanted consistency to the batter product and the end product in addition to fat/oil, sugar, taste additives and stabilizers.

Finally, the batter product according to the invention comprises fluid in the form of water and/or a milk fraction and/or milk product. Preferred it is used milk in the form of whole milk or processed milk such as milk powder added water in the prescribed amount, light milk, skimmed milk, etc.. The milk and/or water makes up the liquid portion of the product according to the invention, and it is present in addition to the dry parts of the end product so that the amount reaches 100% (calculated on the weight of the end product). As mentioned supra, if there are used fluid fats (e.g. marine (omega-3) oil, animal oil or plant oil), this fraction will be calculated into the lipid (fat/oil) fraction, but the consistency of the fat fraction will of course influence the liquidity of the final product. A measurement of the amount of fluid to be present in the batter according to the invention, is the water activity of the batter, as mentioned supra.

In the product according to the invention there may also be used lactose-reduced milk so that also lactose-intolerant persons may accept the product. A treated milk portion wherein the milk proteins which may cause allergic reactions have been reduced or removed may also be used for producing a product being suitable for persons with milk allergy. In the batter product according to the present invention, there may, as the liquid portion, also be used another kind of fluid than conventional or processed cow's milk, e.g. water, coconut milk, soy milk etc, or alternatively or additionally milk from other animals, e.g. goat. If special types of tastes are to be obtained in the product produced from the food precursor composition according to the present invention, also other types of liquid such as juices, wine, plant extracts, cognac or whiskey extracts, etc. may be used as part or the complete liquid portion of the product according to the invention. Still the liquid portion of the batter composition according to the invention will have to be present in an amount sufficient to obtain a water activity in the product of 95% or more.

The batter contains entrained carbon dioxide as a swelling and antibacterial component.

In connection with the liquid part of the batter product according to the invention, it shall be mentioned that the end product also may comprise extra ingredients in the form of surfactants, stabilizers, taste enhancers, sweeteners, salt, color and other additives in a total amount from 0% up to 5% (calculated on the weight of the end product). Such extra ingredients may also include spices/taste enhancers such as nutmeg, vanilla, cinnamon, salt, barbecue seasoning, etc. (depending on the wanted taste and use of the end product, e.g. in the case of pancakes if the pancakes are to be used as a dessert or as a dinner meal).

As a sweetener there may be used sugar (glucose, fructose, maltose, etc. or mixtures thereof) or artificial sweeteners e.g. saccharose, sorbitol, aspartame, etc. for optionally producing a product also suited for e.g. diabetics.

Examples of the batter product according to the invention follow infra:

**Example 1.**

Waffle batter:

| Embodiment I | Mixture ratio flour/milk | 40,00% flour | 50,81% milk | 9.19% egg | 100% |
|---|---|---|---|---|---|

| Ingredients | Gram | % | KG | % fat | kg fat | %prot | KG PROT | %Carbo | KG Carbo | %water | kgwater |
|---|---|---|---|---|---|---|---|---|---|---|---|
| Butter oil | 919,9494 | 9,1995 | 0,9199 | 100,000 | 0,920 | 0.000 | 0,000 | 4,700 | | 0 | 0 |
| Vegetable oil | 459,9747 | 4,5997 | 0,4600 | 100,000 | 0,920 | 0,000 | 0.000 | 0,000 | 0 | 0 | 0 |
| Whole egg mass | 799,9972 | 8,0000 | 0,8000 | 10,250 | 0,082 | 45,000 | 0,360 | 3,000 | 0,024 | 4 | 0,032 |
| Wheat flour 78 % | 2019,8889 | 20,1989 | 2,0199 | 2,500 | 0,050 | 11,100 | 0,224 | 70,000 | 1,41392 | 15 | 0,30298 |
| Novation 2700 (starch) | 599,9670 | 5,9997 | 0,6000 | 0,100 | 0,001 | 0,000 | 0,000 | 0.000 | 0 | 10 | 0,06 |
| Skimmed milk | 4661,3094 | 46,6131 | 4,6613 | 3,900 | 0.182 | 3,300 | 0,154 | 4.800 | 0.22374 | 87 | 4.05534 |
| Sugar in eggs | 91,9220 | 0,9192 | 0,0919 | 0,000 | 0,000 | 0,000 | 0,000 | 100.000 | 0,09192 | 0 | 0 |
| Sugar in milk | 406,4800 | 4,0648 | 0,4065 | 0,000 | 0,000 | 0,000 | 0,000 | 100,000 | 0,40648 | 0 | 0 |
| Freemulsion KN | 8,1296 | 0,0813 | 0.0081 | | | 0,000 | | 0,000 | 100,000 | 0,00813 | | 0 |
| Vanilla, Danisco U 35636 | 5,0810 | 0,0508 | 0,0051 | 0,000 | 0,000 | 0,000 | 0,000 | 0.000 | 0 | 99 | 0.00503 |
| Salt | 27,3008 | 0.2730 | 0.0273 | 0,000 | 0,000 | 0,000 | 0,000 | 0,000 | 0 | 0 | 0 |
| Total | 110000,0000 | 100,0000 | 10,0000 | 16.948 | 1,695 | 7,380 | 0,738 | 21,682 | 2,1682 | 44,553 | 4,45535 |

Purpose of the experiment 55,8126 % milk products

<u>Flour portion</u>

| Butter oil | 0,9199 g |
|---|---|
| Vegetable oil | 0,4600 g |
| Wheat flour, 78% | 2,0199 g |
| Novation 2700* (starch) | 0,6000 g |
| Sum | 3,998 g |
| (* "Novation 2700" is a brand name from National Starch, DE) | |

<u>The milk fraction</u>

| Sugar | 0,4065 g | |
|---|---|---|
| Skimmed milk | 4,6613 g | |
| Freemulsion KN* (stabilizer) | 0,0081 g | <u>Consideration</u> |
| Vanilla, Danisco U 35636 | <u>0,0051</u> g | Frying time 1,5 min |
| Sum | 5,0810 g | |
| (♦ Commercially available stabilizer from Sesalpinia, IT) | | |

<u>The egg fraction</u>

| Whole egg mass | 0,8000 g | |
|---|---|---|
| Sugar in eggs | 0,0919 g | |
| Salt | <u>0,0273</u> g | |
| | 0,9192 g | |
| Total | 10,0000 g | |
| Waffle batter | | Consistency waffle |

| Homogenizer 70/15 bar | |
|---|---|
| (main pressure/rear pressure) | Consistency batter |

## PROCESS:

**The flour fraction**

The butter oil is melted and heated to 80°C in a Tetra Albatch processor.

Flour and starch is added (see infra).

After the addition of flour there is added a vacuum of up to 90% and the vacuum pump is switched off. The mixer is activated.

Then the composition is indirectly heated to 110°C. The mixer is run.

The composition is cooled to 50°C or below. The mixer is active.

**The milk fraction**

UHT-treated directly to 142°C for 4 sec. (see infra).

Homo 70/15 bar, downstream.

The fraction is cooled to 50°C or below and drawn into buckets.

**The egg fraction**

The egg fraction is heat treated at 70°C for 90 sec and is cooled to 50°C or below

**Final batter**

A mix of the correct amount (see infra) of flour-, milk- and egg fractions are mixed in a sterile tank at 50°C.

The final batter is cooled to 4°C.

Finally, the batter is whipped with nitrogen and carbondioxide (see infra).

The final batter may optionally be packed into portion containers or other suitable containers (see infra).

|  | **Embodiment II** | 1,1 | 1 |

| Ingredients | Gram | % | KG | % Fat | kg Fat | %PROT | KG PROT | % Carbo | kg Carbo | % Water | kg Water |
|---|---|---|---|---|---|---|---|---|---|---|---|
| Butter oil | 34500,0000 | 23,0000 | 34,5000 | 100,000 | 34,500 | 0,000 | 0,000 | 4,700 | | 0 | 0 |
| Vegetable oil | 17250,0000 | 11,5000 | 17,2500 | 100,000 | 17,250 | 0,000 | 0,000 | 0,000 | 0 | 0 | 0 |
| Wheat flour, 78 % | 75750,0000 | 50,5000 | 75.7500 | 2,500 | 1,894 | 11,100 | 8,408 | 70,000 | 53,025 | 15 | 11,3625 |
| Starch | 22500,0000 | 15,0000 | 22,5000 | 0,000 | 0,000 | 0,000 | 0,000 | 0,000 | 0 | 15 | 3,375 |
| C¤EmTex 06328 | 0,0000 | 0,0000 | 0,0000 | 0,000 | 0,000 | 0,000 | 0,000 | 0,000 | 0 | 15 | 0 |
| Total: | 150000,0000 | 100,0000 | 150,0000 | 35,763 | 53,644 | 5,606 | 8,408 | 35,350 | 53,025 | 9.825 | 14,7375 |

EP 1 912 508 B1

**Embodiment III**      1,1      1

| Ingredients | Gram | % | KG | % Fat | kg Fat | %PROT | KG PROT | % Carbo | kg Carbo | % Water | kg Water |
|---|---|---|---|---|---|---|---|---|---|---|---|
| Dem. whey powder | 0,0000 | 0,0000 | 0,0000 | 0,000 | 0,000 | 0.000 | 0,000 | 0,000 | 0 | 2 | 0 |
| Salt | 0,0000 | 0,0000 | 0,0000 | 0,000 | 0,000 | 0,000 | 0,000 | 0,000 | 0 | 0 | 0 |
| Skimmed milk | 18348,0000 | 91,7400 | 18,3480 | 0,100 | 0,018 | 3,300 | 0,605 | 4,800 | 0,8807 | 87 | 15,96 |
| Sugar | 1600,0000 | 8,0000 | 1,6000 | 0,000 | 0,000 | 0,000 | 0,000 | 100,000 | 1,6 | 0 | #REF! |
| Karagenan | 32,0000 | 0,1600 | 0,0320 | | 0,000 | | 0,000 | 100,000 | 0,032 | | 0 |
| Vanilia, Danisco U35636 | 20,0000 | 0,1000 | 0,0200 | 0.000 | 0,000 | 0,000 | 0,000 | 0,000 | 0 | 99 | 0.02 |
| Total | 20040,0000 | 100,0000 | 20,0000 | 0,092 | 0,018 | 3,027 | 0,605 | 12,564 | 2,51271 | #### | #REF! |

Reduced vanilla

| Embodiment IV | | | 1,1 | 1 |

| Ingredients | Gram | % | KG | % Fat | kg Fat | %PROT | KG PROT | % Carbo | kg Carbo | % Water | kg Water |
|---|---|---|---|---|---|---|---|---|---|---|---|
| Whole egg | 8703,0000 | 87,0300 | 6,7030 | 41,000 | 3.568 | 45,000 | 3918 | 3,000 | 0,26109 | 4 | 0,34812 |
| Sugar | 1000,0000 | 10,0000 | 1,0000 | 0,000 | | 0,000 | 0,000 | 100,000 | 1 | 0 | 0 |
| Salt | 297,0000 | 2,9700 | 0,2970 | 0,000 | 0,000 | 0,000 | 0,000 | 0,000 | 0 | 100 | 0,297 |
| Total | 10000,0000 | 100,0000 | 10,0000 | 35,682 | 0,568 | 39,164 | 3,916 | 12,611 | 1,26109 | 6,451 | 0,64512 |

**Whipping of the batter in an aerator**

| Gas | $N_2$ and $CO_2$ |
|---|---|
| Inlet pressure | 6 bars |
| System pressure | 0,9 bars |
| Rear pressure | 2 bars |
| Flowmeter | 1 |
| Pump | Max |
| Mixer | 600 |
| Overrun | 7,00% |

## Embodiment V

| Embodiment V | Mixture ratio FLOUR/milk | 40,00% flour | 50.81% milk | 9.19% egg | 100% |
|---|---|---|---|---|---|

| Raw material | Gram | % | KG | % fat | kg fat | % prot. | kg prot. | % carbo. | kg carbo. | % water | kg water |
|---|---|---|---|---|---|---|---|---|---|---|---|
| Butter oil | 9199.4940 | 9.1995 | 9.1995 | 100.000 | 9.199 | 0.000 | 0.000 | 4.700 | | 0 | 0 |
| Vegetable oil | 4599.7470 | 4.5997 | 4.4997 | 100.000 | 4.600 | 0.000 | 0.000 | 0.000 | 0 | 0 | 0 |
| Whole egg mass | 7999.9717 | 8.0000 | 8.0000 | 10.250 | 0.820 | 45.000 | 3.600 | 3.000 | 0.24 | 4 | 0.32 |
| Wheat flour, 78% | 20198.8890 | 20.1989 | 20.1989 | 2.500 | 0.505 | 11.100 | 2.242 | 70.000 | 14.1392 | 15 | 3.02983 |
| Novation 2700 | 5999.6700 | 5.9997 | 5.9997 | 0.100 | 0.006 | 0.000 | 0.000 | 0.000 | 0 | 10 | 0.59997 |
| Whole milk | 46577.5270 | 46.5775 | 46.5775 | 3.900 | 1.817 | 3.300 | 1.537 | 4.800 | 2.23572 | 87 | 405224 |
| Sugar in egg | 919.2200 | 0.9192 | 0.9192 | 0.000 | 0.000 | 0.000 | 0.000 | 100.000 | 0.91922 | 0 | 0 |
| Sugar in milk | 4064.8000 | 4.0648 | 4.0648 | 0.000 | 0.000 | 0.000 | 0.000 | 100.000 | 4.0648 | 0 | 0 |
| Freemulsion KN | 116.8630 | 0.1169 | 0.1169 | | 0.000 | | 0.000 | 100.000 | 0.11686 | | 0 |
| Vanilla, Danisco U 35636 | 50.8100 | 0.0508 | 0.0508 | 0.000 | 0.000 | 0.000 | 0.000 | 0.000 | 0 | 99 | 0.0503 |
| Salt | 273.0083 | 0.2730 | 0.2730 | 0.000 | 0.000 | 0.000 | 0.000 | 0.000 | 0 | 0 | 0 |
| Total | 100000.0000 | 100.0000 | 100.0000 | 16.947 | 16.947 | 7.379 | 7.379 | 21.716 | 21.7158 | 44.523 | 44.5225 |

Purpose of the experiment     55.7770 % milk products

## Flour fraction

| Butter oil | 9,1995 g |
|---|---|
| Vegetable oil | 4,5997 g |
| Wheat flour, 78% | 20,1989 g |
| Novation 2700* (starch) | 5,9997 g |
| Sum | 39,9978 g |
| (* "Novation 2700" is a brand name from National Starch, DE) | |

## The milk fraction

| Sugar | 4,0648 g | |
|---|---|---|
| Whole milk | 46,5775 g | |
| Freemulsion KN* (stabilizer) | 0,1169 g | Consideration |
| Vanilla, Danisco U 35636 | 0,0508 g | Frying time 1,5 min |
| Sum | 50,8100 g | |
| (♦ Commercially available stabilizer from Sesalpinia, IT) | | |

## The egg fraction

| Whole egg mass | 8,0000 g | |
|---|---|---|
| Sugar in eggs | 0,9192 g | |
| Salt | 0,2730 g | |
| | 9,1922 g | |
| Total | 100,0000 g | Consistency waffle |

Homogenizer 70/15 bar (main pressure/rear pressure)     Consistency batter

## PROCESS:

The butter oil is melted and heated to 80°C in a Tetra Albatch processor.

Flour and starch is added (see infra).

After the addition of flour there is added a vacuum of up to 50% and the vacuum pump is deactivated. The mixer is activated.

The composition is then indirectly heated to 110°C. The mixer is run with the knives at half speed and at the lowest level.

The mixture is cooled to 50°C or below. The mixer and knives are active.

### The milk fraction

UHT-treated directly to 142°C for 4 sec.

Homo 70/15 bar, downstream

The mixture is cooled to 50°C or below (ambient temperatures) and drawn into buckets.

**Final batter**

The correct amount of flour fraction (see infra) is added to a sterile tank at 50°C.

The correct amounts of egg and milk fractions are added.

Cooling to 4°C.

Whipping with nitrogen.

## Example 2

Waffle batter:

| Embodiment VI | Mixture ratio flour/milk | 38,00 % Mel | 52,81 % melk | 9,19 % egg | 100 % |
|---|---|---|---|---|---|

| Ingredients | Gram | % | KG | % Fat | kg Fat | %PROT | KG PROT | % Carbo | kg Carbo | % Water | kg Water |
|---|---|---|---|---|---|---|---|---|---|---|---|
| Butter oil | 3932,7723 | 8,7395 | 3,9328 | 100,000 | 3,933 | 0,000 | 0,000 | 4,700 | | 0 | 0 |
| Vegetable oil | 1966,3862 | 4,3697 | 1,9664 | 100,000 | 4,966 | 0,000 | 0,000 | 0,000 | 0 | 0 | 0 |
| Whole egg mass | 3599,9872 | 8,0000 | 3,6000 | 10,250 | 0,369 | 45,000 | 1,620 | 3,000 | 0,108 | 4 | 0,144 |
| Wheat flour, 78 % | 8635,0001 | 19,1889 | 8,6350 | 2,500 | 0,216 | 11,100 | 0,958 | 70,000 | 6,0445 | 15 | 1,29525 |
| Novation 2700 | 2564,8515 | 5,6997 | 2,5649 | 0,100 | 0,003 | 0,000 | 0,000 | 0,000 | 0 | 10 | 0.25649 |
| | 0,0000 | 0,0000 | 0,0000 | 0,000 | 0,000 | 0,000 | 0,000 | 0,000 | 0 | 15 | 0 |
| | 0,0000 | 0,0000 | 0,0000 | 0,000 | 0,000 | 0,000 | 0,000 | 0,000 | 0 | 2 | 0 |
| Salt in milk | 142,5870 | 0,3169 | 0,1426 | 0,000 | 0,000 | 0,000 | 0,000 | 0,000 | 0 | 0 | 0 |
| Skimmed milk | 23621,9930 | 52,4931 | 23,6219 | 3,900 | 0,923 | 3,300 | 0,780 | 4,800 | 1,13385 | 87 | 20,5511 |
| Sugar in eggs | 413,6490 | 0,9192 | 0,4136 | 0,000 | 0,000 | 0,000 | 0,000 | 100,000 | 0,41365 | 0 | 0 |
| Sugar in milk | 0,0000 | 0,0000 | 0,0000 | 0,000 | 0,000 | 0,000 | 0,000 | 100,000 | 0 | 0 | 0 |
| Freemulsion KN | 0,0000 | 0,0000 | 0,0000 | | 0,000 | | 0,000 | 100,000 | 0 | | 0 |
| Vanilla, Danisco U35636 | 0,0000 | 0,0000 | 0,0000 | 0,000 | 0,000 | 0,000 | 0,000 | 0,000 | 0 | 99 | 0 |
| Salt | 122,8538 | 0,2730 | 0,1229 | 0,000 | 0,000 | 0,000 | 0,000 | 0,000 | 0 | 0 | 0 |
| Total | 45000,0000 | 100,0000 | 45,0000 | 16,462 | 7,408 | 7,462 | 3,358 | 17,111 | 7,7 | 49,437 | 22,2468 |

The purpose of the experiment:        61,2326 % milk products

**The flour fraction**

| | |
|---|---|
| Butter oil | 3,9328 g |
| Vegetable oil | 1,9664 g |
| Wheat flour, 78% | 8,6350 g |
| Novation 2700* (starch) | 2.5649 g |
| Sum | 17,0990 g |
| (* "Novation 2700" is a starch trademark sold from National Starch, DE.) | |

**The milk fraction**

| | |
|---|---|
| Sugar | 0,0000 g |
| Skimmed milk | 23,6219 g |
| Stabilizer | 0,0000 g |
| Vanilla | 0,0229 g |
| Total | 23,7645 g |

Frying time: 1,5 min

**The egg fraction**

| | |
|---|---|
| Whole egg mass | 3,6000 g |
| Sugar in eggs | 0,4136 g |
| Salt | 0,1229 g |
| Sum | 4,1365 g |
| Total | 45,0000 g |

Homogenizer 70/15 bars (main pressure/rear pressure)

**Process:**

The butter oil is melted and heated to 80°C (Scanima). The flour and starch is added.
After the addition of flour there is supplied a vacuum of up to 90%. The mixer is engaged. The mixture is kept at 60°C for 20 min. with vacuum to evaporate water.
The mixture is then heated indirectly to 110°C. The batter is subsequently cooled to 50°C. Mixer and knives are engaged.

**The milk fraction**

UHT treated directly to 142°C for 4 sec.
Homo 70/15 bars, downstream
Is cooled to ambient temperature and pumped over to a mixing tank.

**Final batter**

Correct temperature in the mixing tank is 50°C
Add correct amount of egg/flour mix.

Cooling to 4°C.
Whipping with nitrogen and carbon dioxide.

**Conclusive evaluation:**

Modified recipe

Embodiment VII     1,1        1

| Ingredients | Gram | % | KG | % Fat | kg Fat | %PROT | KGPROT | % Carbo | KG KARBO | % Water | kg Water |
|---|---|---|---|---|---|---|---|---|---|---|---|
| Butter oil | 3450,0000 | 23,0000 | 3,4600 | 100,000 | 3,450 | 0,000 | 0,000 | 4,700 | | 0 | 0 |
| Vegetable oil | 1725,0000 | 11,5000 | 1,7250 | 100,000 | 1,725 | 0,000 | 0,000 | 0,000 | 0 | 0 | 0 |
| Wheat flour, 78 % | 7575,0000 | 50,6000 | 7,5750 | 2,600 | 0,189 | 11,100 | 0,841 | 70,000 | 5,3025 | 15 | 1,13625 |
| Starch | 2250,0000 | 15,0000 | 2,2500 | 0,000 | 0,000 | 0,000 | 0,000 | 0,000 | 0 | 15 | 0,3375 |
| C¤EmTex 06328 | 0,0000 | 0,0000 | 0,0000 | 0,000 | 0,000 | 0,000 | 0,000 | 0,000 | 0 | 15 | 0 |
| Total | 15000,0000 | 100,0000 | 15,0000 | 35,763 | 5,364 | 5,606 | 0,841 | 35,350 | 5,3025 | 9,825 | 1,47375 |

Embodiment VIII     1,1          1

Embodiment VIII     1,1          1

| Ingredients | Gram | % | KG | % Fat | kg Fat | %PROT | KG PROT | % Carbo | kg Carbon | % Water | kg Water |
|---|---|---|---|---|---|---|---|---|---|---|---|
| Dem. whey powder | 0,0000 | 0,0000 | 0,0000 | 0,000 | 0,000 | 0,000 | 0,000 | 0,000 | 0 | 2 | 0 |
| Salt | 180,0000 | 0,6000 | 0,1800 | 0,000 | 0,000 | 0,006 | 0,000 | 0,000 | 0 | 0 | 0 |
| Whole milk | 29820,0000 | 99,4000 | 29,8200 | 0,100 | 0,030 | 3,300 | 0,984 | 4,800 | 1,4314 | | 87 25,94 |
| Sugar | 0,0000 | 0,0000 | 0,0000 | 0,000 | 0,000 | 0,000 | 0,000 | 100,000 | 0 | 0 | #REFI |
| Freemulsion cm3 | 0,0000 | 0,0000 | 0,0000 | | 0,000 | | 0,000 | 100,000 | 0 | | 0 |
| Vanilla Iff 82.28.8042 | 0,0000 | 0,0000 | 0,0000 | 0,000 | 0,000 | 0,000 | 0,000 | 0,000 | 0 | 99 | 0 |
| Total | 30000,0000 | 100,0000 | 30,6060 | 0,099 | 0,030 | 3,280 | 0,984 | 4,771 | 1,4314 | ### | #REFI |

Embodiment IX     1,1          1

| Ingredients | Gram | % | KG | % Fat | kg Fat | %PROT | KG PROT | % Carbo | kg Carbo | % Water | kg Water |
|---|---|---|---|---|---|---|---|---|---|---|---|
| Whole egg | 16439,9923 | 87,0300 | 16,4390 | 41,000 | 6,740 | 45,000 | 7,398 | 3,000 | 0,49316977 | 4 | 0,65755969 |
| Sugar | 1888,8880 | 10,0000 | 1,8889 | 0,000 | | 0,000 | 0.000 | 100,000 | 1,888888 | 0 | 0 |
| Salt | 660,9997 | 2,9700 | 0,5610 | 0,000 | 0,000 | 0,000 | 0,000 | 0,000 | 0 | 100 | 0,56099974 |
| Total | 18888,8800 | 100.0000 | 18,8889 | 35.682 | 6,740 | 39,164 | 7,398 | 12.611 | 2,38205777 | 6,451 | 1,21855943 |

Conventional batters for pastry will in some cases require that the batter expands/swells (e.g. waffles), and this has previously been achieved by expanding substances such as baking powder, sodium bicarbonate, salt of hartshorn, etc. having been added to the batter. Ready made batters with a long shelf life may be obtained by adding finely dispersed carbon dioxide. The gas will, at the frying or heating of the product, expand and produce swelling of the product. An amount of inert gas to be added for providing such an effect, will lie within the interval 5-30% (5-30% "overrun", i.e. there will be whipped into the batter so much gas (cold condition, 0-10°C, preferred about 4°C) that the volume of the batter increases with 5-30%). More preferred it will be whipped inert gas into the batter corresponding to about 20% overrun.

The "overrun" in this connection is defined by the equation

$$(V_2 - V_1)/V_1 \times 100 = \text{percentage overrun}$$

wherein

$V_1$ = volume prior to whipping

$V_2$ = volume after whipping

In connection with waffle batter there may e.g. be used an amount of carbon dioxide of 1 gram per kilo batter. Here it is, however, not relevant with any overrun since the gas dissolves into the water phase. It will also be possible to use compositions of inert gases for producing the said expanding effect. The use of carbon dioxide in the food precursor product according to the invention will, in addition to assisting with the expansion/swelling of the product by the gas being liberated from the water in the batter when raising the temperature during frying, also assist with increasing the keeping capacity (shelf life) of the product since carbon dioxide is a bactericidal gas.

The addition of nitrogen and/or carbon dioxide by whipping into the batter may be performed with a conventional whipping/mixing device such as an aerator being suitable for industrial mousse production.

The present invention also comprises a process for producing the batter product as described in claim 14.

The production of batter products may be separated into three phases and five steps:

| Phase 1 | Phase 2 | Phase 3 | |
|---|---|---|---|
| Flour/oil | Eggs | Milk/liquid | Step 1 |
| | ⇓ | | |
| | Mixing of the phases | | Step 2 |
| | ⇓ | | |
| | Homogenizing and cooling | | Step 3 |
| | ⇓ | | |
| | Inclusion of gases by whipping/ injection | | Step 4 |
| | ⇓ | | |
| | Emptying into containers | | Step 5 |

The three phases in step 1 are produced in parallel, whereas the steps from 1 to 5 are performed chronologically. In those products where egg is not used, the egg phase (phase 2) will simply be omitted from the process.

This process line will make it possible to produce liquid food precursor products such as sauces, thickeners and batters with a shelf life of at least 6 weeks in a refrigerated state at 0 to 4°C.

Disclosure of the process:

**STEP 1.**

Phase 1: The flour/oil phase.

In this phase the starch will be sterilized without destroying its capacity to bind water.

The starch is heat treated in water-free oil at a time/temperature combination that is able to kill vegetative microorganisms and spore producers so that the final product obtains a storage capacity of at least 6 weeks when refrigerated. That is, in a temperature interval of 50-150°C, more preferred 90-110°C. e.g. 105°C for a time interval being sufficient to sterilize the composition by removing/killing microorganisms to produce a first phase with a sufficiently low bacterial count, e.g. for a time interval of 1-15 minutes, more preferred 1-7 minutes, e.g. 5 minutes. A heat treatment of e.g. 110°C for 5 minutes is sufficient.

An important detail in the sterilizing of the four phase is that the first part of heating (up to 50°C) is performed under vacuum. This is done because the starch contains up to 15% water which is to be removed before the relevant polysaccharides reach their swelling point.

After the heating phase 1 needs to be cooled to below 50°C before it is mixed with the other phases in step 2. This is important for preventing the starch from swelling. Normally, the relevant substances will not swell before they reach 60°, but the present heating process changes the properties of the starch.

Polysaccharides that may be used are inter alia wheat starch and tapioca starch.

Relevant types of oils are vegetable oils such as butter oil, soy oil, rape seed oil, sunflower oil, olive oil, etc., animal oils, e.g. marine oils such as cod liver oil (omega-3 very long chain polyunsaturated fatty acids) etc..

Phase 2: Eggs.

This phase may be omitted if there is to be produced batter products without any addition of eggs (allergy-safe products, gravy, etc.). The egg phase is heated to the extent that the bacteria content becomes so reduced that the mixture obtains a shelving lifetime of at least 6 weeks under refrigerated conditions. The heat treatment is still not so extensive that the proteins congeal. A trick is here to add some sugar to the egg material. This protects the proteins somewhat so that it is possible to raise the treatment temperature to a degree over what a person skilled in the art might expect. In the present invention there has been used up to about 10% sugar. A typical heat load is 70°C for 90 seconds. After this heat treatment phase 2 needs to be cooled to below 50°C before it is added to the other phases in step 2. To obtain a satisfactory bacteriology in the egg phase, the processing equipment should be designed as a UHT-plant (ultra-high temperature plant). A UHT-plant is used conventionally within the art and provides a heat treatment that is sufficiently strong for the product to become substantially sterile. In a UHT-plant the equipment will also after the heat treatment be designed in such a way that reinfection of the product is avoided. This is relevant for all the parts that come into contact with the product such as piping, valve arrangements, homogenizer, intermediate storage tanks, draining machine, gas- and gas supply equipment as well as sterilizing of the containers.

Phase 3: Milk.

The milk phase contains, in addition to milk, also taste elements and stabilizers that make it possible to produce a mousse from the composition obtained in step 2. The milk phase is given a heat treatment sufficient to provide a shelf lifetime to this phase also of at least 6 weeks. There has e.g. been used 110°C, for 2,5 min.

**STEP 2.**

In step 2 the three phases are mixed to form a product with a prolonged shelving lifetime such as (waffle) batter. The temperature in the mixture must lie above the melting point of the oil/fat, but below the swelling point of the polysaccharides.

**STEP 3.**

In step 3 the batter is homogenized and cooled to the relevant storing temperature, i.e. below 15°C, preferred 0 to 4°C.

The correct homogenizing pressure is important. It must not be so high that the oil/fat becomes bound too tightly to the proteins. Usable pressures lie conveniently below 70 bars. If the pressure becomes too high the batter may e.g. adhere by charring to the waffle iron/frying pan during frying.

**STEP 4.**

This step may be omitted if it is preferred an end product wherein it is not necessary that the product swells. The products according to the invention require swelling during frying (e.g. waffle batter and there is added inert gas (e.g. nitrogen or carbon dioxide). The amount of gas depends on how much the product is to swell. For waffles a 20% overrun is suitable. In addition to an inert gas or as a substitute to an inert gas, carbon dioxide is added to ensure an improved bacteriological keeping capacity. A suitable amount is about 1 gram gas per kilo product.

### STEP 5.

It is important for the product that it is packed in a container/enclosure with good gas barrier properties. An important parameter is the resistance of the container/enclosure against penetration of carbon dioxide and oxygen. Selection of such materials lies within the purview of the person skilled in the art. Examples of such materials are laminated plastics (polyethylene, polyvinyl, polystyrene, EVOH, etc.) optionally layered internally with a metal foil, e.g. aluminum.

It is preferred that the product according to the invention is filled into the container/enclosure to 100% of its volume. If, however, there is used a lower filling ratio of the container/enclosure where a headspace is required, the oxygen content must then not exceed 3% in the gas pocket above the batter. This means that the product should be flushed with inert gas and optionally carbon dioxide.

A container/enclosure with poor oxygen barrier properties, or if there is too much oxygen in the head space gives a discoloration of the batter (it becomes gray), whereas a poor carbon dioxide barrier makes this gas disappear from the batter during storage. This lessens the keeping capacity of the batter.

**Claims**

1.   Batter comprising

(a) a portion of polysaccharides in the form of flour within the interval 25-50%, preferred 30-45%, most preferred 35-42%, especially 38-40% calculated on the weight of the end product;
(b) sugar in the form of mono-, di- or oligosaccharides,
(c) a portion of fat/oil in the form of 8-40C fatty acids within the interval 3-20%, more preferred 5-15%, even more preferred 7-13%, e.g. 8% calculated on the weight of the end product;
(d) a portion of eggs and/or an egg fraction within the interval up to 15%, preferred 5-10%, e.g. 8% calculated on the weight of the end product;
(e) a portion of fluid in the form of water and/or a milk fraction and/or milk product wherein this fluid represents the balance of the batter up to 100% calculated on the weight of the end product,

wherein the water activity of the batter exceeds 95% and wherein the batter has entrained carbon dioxide as a swelling and antibacterial component.

2.   Batter according to claim 1, wherein the polysaccharides in section (a) originates from flour or a flour product where the water has been substantially or completely removed.

3.   Batter according to claim 1, wherein the polysaccharides in section (a) are selected from the group cereals, e.g. wheat, barley, rye, potato, corn (maize), tapioca or corresponding flour compositions, dextrans, guar rubbers, xanthan rubbers, LGB ("Locus Bean Glum") or carrageenan or mixtures thereof.

4.   Batter according to claim 1, wherein the sugar is glucose, fructose, and/or maltose.

5.   Batter according to claims 1 - 4, wherein the fat/oil is an edible vegetable fat/oil or an animal fat/oil in the form of fatty acids with a chain length of 8-40 C-atoms, more preferred 10-35 C-atoms, especially 15-30 C-atoms.

6.   Batter according to claim 5, wherein the fatty acids are selected from the group consisting of stearic acid or palmitic acid; natural fat/oil compositions comprising vegetable and/or animal fats/oils or combinations thereof.

7.   Batter according to claim 6, wherein the vegetable and/or animal fat/oil is selected from the group consisting of butter oil, soy oil, rape oil, olive oil, linen seed oil, sun flower oil etc. or combinations thereof.

8.   Batter according to claims 6 or 7, wherein the fat/oil comprises omega-3 very long chain polyunsaturated fatty acids, such as marine oils e.g. fish (cod liver) oil or processed/deodorized fish oil.

9.   Batter according to claims 5 - 8, wherein the relevant fat/oil types are hardened fats/oils.

10. Batter according to claims 5 - 9, wherein the fat/oil types are saturated and/or unsaturated.

11. Batter according to claims 1 - 10, wherein the batter furthermore comprises constituents in the form of surfactants, stabilizers, taste enhancers, sweeteners, salt, color and other additives such as spices, taste additives (wine, cognac/whiskey extracts, etc.) in a total amount of from 0% and up to 5% (calculated on the weight of the end product).

12. Batter according to claim 11, wherein the batter includes artificial sweeteners e.g. saccharose, sorbitol and/or aspartame.

13. Batter according to any of the claims 1 - 12, wherein the batter additionally includes an inert gas, e.g. nitrogen.

14. Process for producing a batter according to any of the claims 1 - 13, **characterized in that**

   (i) the ingredients under section (a) as defined in claim 1 are heated in the ingredients from section (c) as defined in claims 1 in a temperature interval of 50-150°C, more preferred 90-110°C, e.g. 105°C for a time interval being sufficient to sterilize the composition by killing microorganisms to produce a first phase with a sufficiently low bacterial count, e.g. for a time interval of 1-15 minutes, more preferred 1-7 minutes, e.g. 5 minutes;
   (ii) the ingredients under section (e) as defined in claim 1 are heat treated to provide a shelf lifetime of at least 6 weeks;
   and optionally
   (iii) the ingredients under section (b) and (d) as defined in claim 1, are heat treated at a temperature and for a time interval that does not destroy the proteins in this material, whereafter the material is brought to a temperature below 50°C for producing a second phase;
   whereafter the phases (i), (ii) and (iii) are mixed mechanically with each other at a temperature that lies above the melting point of the fat/oil, but below the swelling point of the polysaccharides, homogenized to a homogenous composition and cooled to below 15°C, preferred 0-4°C; and whereafter carbon dioxide is filled into the product and/or the container/enclosure as a bactericidal gas.

15. Process according to claim 14,
   **characteriz**ed **in that**
   a further bactericidal and/or inert gas is added to the resulting homogenate for
   producing a fluid/semi-fluid product in the form of a mousse.

16. Process according to claims 14 or 15,
   **characterized in that** the end product is filled into a container/enclosure comprising a gas barrier, especially a gas barrier being effective towards carbon dioxide and oxygen.

17. Process according to claim 16,
   **characterized in that** the end product is filled completely (100%) into the container/enclosure.

18. Process according to claim 16,
   **characterized in that** the end product is filled in a contained/enclosure with a "headspace", the oxygen content in the gas composition over the end product not exceeding 3%, and preferably wherein the gas composition over the end product comprising an inert gas, optionally carbon dioxide, with an oxygen content not exceeding 3%.

19. Process according to claims 14 - 16,
   **characterized in that** the inert gas is nitrogen.

20. Process according to any of the claims 14 - 19,
   **characterized in that** the heating of the polysaccharides in phase (i) is done in two steps, wherein the heating of the polysaccharides up to 60°C is done under vacuum for removing possible water in the polysaccharide section.

21. Process according to any of the claims 14 - 20,
   **characterized in that** the heating of the proteins in phase (ii) is done at the addition of sugar, e.g. 10% sugar.

22. The use of a batter according to any of the claims 1 - 13 for the production of pancakes.

23. The use of a batter according to any of the claims 1 - 13 for the production of waffles.

**24.** The use of a batter according to any of the claims 1 - 13 for the production of muffins.

**25.** The use of a batter according to any of the claims 1 - 13 for the production of sponge cake.

**26.** The use of a batter according to any of the claims 1 - 13 for the production of pre-made layers for layer-cake.


**Patentansprüche**

**1.** Teig, umfassend

(a) einen Anteil von Polysacchariden in Form von Mehl im Bereich von 25-50%, bevorzugt 30-45%, eher bevorzugt 35-42%, insbesondere 38-40%, bezogen auf das Gewicht des Endproduktes;
(b) Zucker in Form von Mono-, Di- oder Oligosacchariden,
(c) einen Anteil von Fett/Öl in Form von 8-40C Fettsäuren im Bereich von 3-20%, eher bevorzugt 5-15%, noch eher bevorzugt 7-13%, z.B. 8%, bezogen auf das Gewicht des Endproduktes;
(d) einen Anteil von Eiern und/oder eine Fraktion von Eiern im Bereich von bis zu 15%, bevorzugt 5-10%, z.B. 8%, bezogen auf das Gewicht des Endproduktes;
(e) einen Anteil von Flüssigkeit in Form von Wasser und/oder eine Fraktion von Milch und/oder ein Milchprodukt, wobei diese Flüssigkeit die Balance des Teigs von bis zu 100% bezogen auf das Gewicht des Endproduktes darstellt,

wobei die Wasseraktivität des Teigs um 95% überschreitet, und wobei der Teig Kohlendioxid als einen quellenden und antibakteriellen Bestandteil eingeschlossen hat.

**2.** Teig nach Anspruch 1, wobei die Polysaccharide unter Abschnitt (a) aus Mehl oder einem Mehlprodukt stammt, von dem das Wasser im Wesentlichen oder völlig entfernt worden ist.

**3.** Teig nach Anspruch 1, wobei die Polysaccharide unter Abschnitt (a) aus der Gruppe bestehend aus Getreide, z.B. Weizen, Gerste, Roggen, Kartoffel, Korn (Mais), Tapioka oder entsprechenden Mehlzusammensetzungen, Dextranen, Guargummi, Xanthangummi, LGB ("Locus Bean Gum") oder Carrageen oder Mischungen davon ausgewählt sind.

**4.** Teig nach Anspruch 1, wobei der Zucker Glukose, Fructose und/oder Maltose ist.

**5.** Teig nach den Ansprüchen 1 bis 4, wobei das Fett/Öl ein essbares, pflanzliches Fett/Öl oder ein tierisches Fett/Öl in Form von Fettsäuren mit einer Kettenlänge von 8-40 C-Atomen, eher bevorzugt 10-35 C-Atomen, insbesondere 15-30 C-Atomen, ist.

**6.** Teig nach Anspruch 5, wobei die Fettsäuren aus der Gruppe bestehend aus Stearinsäure oder Palmitinsäure; natürlichen Fett-/Ölzusammensetzungen umfassend pflanzliche und/oder tierische Fette/Öle oder Kombinationen davon ausgewählt sind.

**7.** Teig nach Anspruch 6, wobei das pflanzliche und/oder tierische Fett/Öl aus der Gruppe bestehend aus Butteröl, Sojaöl, Rapsöl, Olivenöl, Leinsamenöl, Sonnenblumenöl etc. oder Kombinationen davon ausgewählt ist.

**8.** Teig nach den Ansprüchen 6 oder 7, wobei das Fett/Öl sehr langkettige polyungesättigte Omega-3 Fettsäuren, wie beispielsweise Marineöle, z.B. Fischöl (Lebertran) oder verarbeitetes/desodoriertes Fischöl, umfasst.

**9.** Teig nach den Ansprüchen 5 bis 8, wobei die betreffenden Fett-/Ölarten gehärtete Fette/Öle sind.

**10.** Teig nach den Ansprüchen 5 bis 9, wobei die Fett-/Ölarten gesättigt und/oder ungesättigt sind.

**11.** Teig nach den Ansprüchen 1 bis 10, wobei der Teig ferner Bestandteile in Form von Tensiden, Stabilisatoren, Geschmacksverstärkern, Süßungsmitteln, Salz, Farbstoffen und sonstigen Additiven, wie beispielsweise Gewürzen, Geschmackszusätze (Wein-, Cognac/Whiskey-Extrakten etc.) in einer gesamten Menge von 0% bis zu 5% (bezogen auf das Gewicht des Endproduktes) umfasst.

**12.** Teig nach Anspruch 11, wobei der Teig künstliche Süssstoffe, z.B. Saccharose, Sorbitol und/oder Aspartam enthält.

**13.** Teig nach einem der Ansprüche 1 bis 12, wobei der Teig ferner ein inertes Gas, z.B. Stickstoff, enthält.

**14.** Verfahren zur Herstellung eines Teigs nach einem der Ansprüche 1 bis 13, **dadurch gekennzeichnet, dass**

(i) die Bestandteile unter Abschnitt (a) wie in Anspruch 1 definiert in den Bestandteilen aus Abschnitt (c) wie in Anspruch 1 definiert in einem Temperaturbereich von 50-150 °C, eher bevorzugt 90-110 °C, z.B. 105 °C, für einen Zeitbereich erhitzt werden, welcher dazu ausreichend ist, die Zusammensetzung durch die Abtötung von Mikroorganismen zu sterilisieren, um eine erste Phase mit einer ausreichend niedrigen Keimzahl, z.B. für einen Zeitbereich von 1-15 Minuten, eher bevorzugt 1-7 Minuten, z.B. 5 Minuten, zu erzeugen;
(ii) die Bestandteile unter Abschnitt (e) wie in Anspruch 1 definiert wärmebehandelt werden, um eine Lagerungslebensdauer von mindestens 6 Wochen bereitzustellen;
und wahlweise
(iii) die Bestandteile unter Abschnitt (b) und (d) wie in Anspruch 1 definiert bei einer Temperatur und für einen Zeitbereich wärmebehandelt werden, welcher die Proteine in diesem Material nicht zerstört, wonach das Material auf eine Temperatur von unter 50 °C gebracht wird, um eine zweite Phase zu erzeugen;
wonach die Phasen (i), (ii) und (iii) bei einer Temperatur, welche über dem Schmelzpunkt des Fettes/Öls, jedoch unter dem Quellpunkt der Polysaccharide liegt, miteinander mechanisch gemischt, zu einer homogenen Zusammensetzung homogenisiert und auf unter 15 °C, bevorzugt 0-4 °C gekühlt werden; und
wonach Kohlendioxid in das Produkt und/oder in den Behälter/in die Einhausung als ein bakterizides Gas gefüllt wird.

**15.** Verfahren nach Anspruch 14, **dadurch gekennzeichnet, dass** ein weiteres, bakterizides und/oder inertes Gas zum resultierenden Homogenat zugegeben wird, um ein flüssiges/semiflüssiges Produkt in Form einer Mousse herzustellen.

**16.** Verfahren nach den Ansprüchen 14 oder 15, **dadurch gekennzeichnet, dass** das Endprodukt in einen Behälter/in eine Einhausung gefüllt wird, welcher/welche eine Gasbarriere, insbesondere eine Gasbarriere umfasst, welche gegenüber Kohlendioxid und Sauerstoff wirksam ist.

**17.** Verfahren nach Anspruch 16, **dadurch gekennzeichnet, dass** das Endprodukt völlig (um 100%) in den Behälter/in die Einhausung gefüllt wird.

**18.** Verfahren nach Anspruch 16, **dadurch gekennzeichnet, dass** das Endprodukt in einen Behälter/in eine Einhausung mit einem "Gasraum" gefüllt wird, der Sauerstoffgehalt in der Gaszusammensetzung über dem Endprodukt nicht um 3% überschreitet, und vorzugsweise wobei die Gaszusammensetzung über dem Endprodukt ein inertes Gas, wahlweise Kohlendioxid, mit einem Sauerstoffgehalt, welcher nicht um 3% überschreitet, umfasst.

**19.** Verfahren nach den Ansprüchen 14 bis 16, **dadurch gekennzeichnet, dass** das inerte Gas Stickstoff ist.

**20.** Verfahren nach einem der Ansprüche 14 bis 19, **dadurch gekennzeichnet, dass** das Erhitzen der Polysaccharide in der Phase (i) in zwei Schritten durchgeführt wird, wobei das Erhitzen der Polysaccharide bis zu 60 °C unter Vakuum erfolgt, um eventuelles Wasser in dem Polysaccharidabschnitt zu entfernen.

**21.** Verfahren nach einem der Ansprüche 14 bis 20, dadurch ekennzeichnet, dass das Erhitzen der Proteine in der Phase (ii) bei der Zugabe von Zucker, z.B. 10% Zucker erfolgt.

**22.** Verwendung eines Teigs nach einem der Ansprüche 1 bis 13 zur Herstellung von Pfannkuchen.

**23.** Verwendung eines Teigs nach einem der Ansprüche 1 bis 13 zur Herstellung von Waffeln.

**24.** Verwendung eines Teigs nach einem der Ansprüche 1 bis 13 zur Herstellung von Muffins.

**25.** Verwendung eines Teigs nach einem der Ansprüche 1 bis 13 zur Herstellung von Biscuitkuchen.

**26.** Verwendung eines Teigs nach einem der Ansprüche 1 bis 13 zur Herstellung vorgefertigter Schichten für Torten.

**Revendications**

1. Pâte comprenant

   (a) une portion de polysaccharides dans la forme de farine comprise entre 25 et 50%, préférablement 30 et 45%, le plus préférablement 35 et 42%, en particulier 38 et 40%, calculée sur le poids du produit final;
   (b) le sucre dans la forme de mono-, di- ou oligosaccharides,
   (c) une portion de matière grasse/d'huile dans la forme d'acides gras de 8 à 40 atomes de carbone comprise entre 3 et 20%, plus préférablement 5 et 15%, encore plus préférablement 7 et 13%, par exemple 8%, calculée sur le poids du produit final;
   (d) une portion d'oeufs et/ou d'une fraction d'oeuf à l'intérieur de l'intervalle jusqu'à 15%, préférablement comprise entre 5 et 10%, par exemple 8%, calculée sur le poids du produit final;
   (e) une portion de fluide dans la forme d'eau et/ou d'une fraction de lait et/ou d'un produit laitier, ce fluide représentant le reste de la pâte jusqu'à 100%, calculé sur le poids du produit final,
   l'activité de l'eau de la pâte étant supérieure à 95%, et la pâte ayant entraîné le dioxyde de carbone en tant qu'un composant de gonflement et antibactérien.

2. Pâte selon la revendication 1, dans laquelle les polysaccharides de la section (a) proviennent de la farine ou d'un produit de la farine, l'eau étant essentiellement ou complètement éliminée.

3. Pâte selon la revendication 1, dans laquelle les polysaccharides de la section (a) sont choisis parmi les groupes céréales, par exemple le blé, l'orge, le seigle, la pomme de terre, le maïs, le tapioca ou des compositions correspondantes de farine, les dextranes, les caoutchoucs de guar, les gommes de xanthane, LGB ("Locus Bean Gum") ou carraghénane ou des mélanges de ceux-ci.

4. Pâte selon la revendication 1, dans laquelle le sucre est le glucose, le fructose et/ou le maltose.

5. Pâte selon les revendications 1 à 4, dans laquelle la matière grasse/l'huile est une matière grasse/huile végétale comestible ou une graisse/huile animale dans la forme d'acides gras avec une longueur de chaîne de 8 à 40 atomes de carbone, plus préférablement de 10 à 35 atomes de carbone, en particulier de 15 à 30 atomes de carbone.

6. Pâte selon la revendication 5, dans laquelle les acides gras sont choisis dans le groupe constitué par l'acide stéarique ou l'acide palmitique; les compositions de graisse/d'huile naturelle comprenant des graisses/huiles végétales et/ou animales ou des combinaisons de ceux-ci.

7. Pâte selon la revendication 6, dans laquelle la graisse/huile végétale et/ou animale est choisie dans le groupe constitué par l'huile de beurre, l'huile de soja, l'huile de colza, l'huile d'olive, l'huile de graines de lin, l'huile de fleur de soleil, etc. ou des combinaisons de celles-ci.

8. Pâte selon les revendications 6 ou 7, dans laquelle la grasse/huile comprend les acides gras polyinsaturés oméga-3 de très longues chaînes, tels que les huiles marines, par exemple l'huile de poissons (de foie de morue) ou l'huile de poisson traitée/désodorisée.

9. Pâte selon les revendications 5 à 8, dans laquelle les types pertinents de graisse/d'huile sont des graisses/huiles durcies.

10. Pâte selon les revendications 5 à 9, dans laquelle les types de graisse/d'huile sont saturés et/ou insaturés.

11. Pâte selon les revendications 1 à 10, dans laquelle la pâte comprend en outre des constituants dans la forme d'agents tensioactifs, de stabilisants, d'exhausteurs de goût, d'édulcorants, de sel, de couleur et d'autres additifs tels que des épices, des additifs de goût (des extraits de vin, de cognac/de whisky, etc.) dans une quantité totale comprise entre 0% et jusqu'à 5% (calculé sur le poids du produit final).

12. Pâte selon la revendication 11, dans laquelle la pâte contient des édulcorants artificiels, par exemple le saccharose, le sorbitol, et/ou l'aspartame.

13. Pâte selon l'une quelconque des revendications 1 à 12, dans laquelle la pâte comprend en outre un gaz inerte, par exemple l'azote.

**14.** Procédé de fabrication d'une pâte selon l'une quelconque des revendications 1 à 13, **caractérisé en ce que**

(i) les ingrédients de la section (a) comme définis dans la revendication 1 sont chauffés dans les ingrédients de la section (c) comme défini dans la revendication 1, dans un intervalle de température compris entre 50 et 150°C, plus préférablement entre 90 et 110°C, par exemple 105°C pendant un intervalle de temps étant suffisant pour stériliser la composition en tuant les microorganismes pour produire une première phase avec un nombre bactérien suffisamment faible, par exemple pendant un intervalle de temps de 1 à 15 minutes, plus préférablement de 1 à 7 minutes, par exemple 5 minutes;

(ii) les ingrédients de la section (d) comme défini dans la revendication 1 sont traités thermiquement pour obtenir une durée de vie au rayon d'au moins 6 semaines;
et éventuellement

(iii) les ingrédients de la section (b) et (d) comme défini dans la revendication 1 sont traité thermiquement à une température et pendant un intervalle de temps qui ne détruit pas les protéines dans cette matière, ensuite la matière est menée à une température inférieure à 50°C pour produire une deuxième phase;

après quoi les phases (i), (ii) et (iii) sont mélangés mécaniquement entre elles à une température qui est supérieure au point de fusion de la graisse/de l'huile, mais inférieure au point de gonflement des polysaccharides, homogénéisées à une composition homogène et refroidies à une température inférieure à 15°C, préférablement 0-4°C; et

ensuite le dioxyde de carbone est rempli dans le produit et/ou le récipient/enveloppe en tant qu'un gaz bactéricide.

**15.** Procédé selon la revendication 14, **caractérisé en ce qu'**un gaz bactéricide et/ou inerte supplémentaire est ajouté à l'homogénat résultant pour produire un produit fluide/semi-fluide dans la forme d'une mousse.

**16.** Procédé selon les revendications 14 ou 15, **caractérisé en ce que** le produit final est rempli dans un récipient/ enveloppe comprenant une barrière aux gaz, en particulier une barrière contre les gaz étant efficace pour le dioxyde de carbone et de l'oxygène.

**17.** Procédé selon la revendication 16, **caractérisé en ce que** le produit final est rempli complètement (100%) dans le conteneur/enveloppe.

**18.** Procédé selon la revendication 16, **caractérisé en ce que** le produit final est rempli dans un conteneur/enveloppe avec un "espace libre", la teneur en oxygène dans la composition de gaz sur le produit final n'étant pas supérieure à 3%, et préférablement la composition de gaz sur le produit final comprenant un gaz inerte, le dioxyde de carbone éventuellement, avec une teneur en oxygène ne dépassant pas 3%.

**19.** Procédé selon les revendications 14 à 16, **caractérisé en ce que** le gaz inerte est de l'azote.

**20.** Procédé selon l'une quelconque des revendications 14 à 19, **caractérisé en ce que** le chauffage des polysaccharides dans la phase (i) est effectuée en deux étapes, le chauffage des polysaccharides jusqu'à 60°C étant effectué sous vide pour enlever l'eau éventuelle dans la section de polysaccharide.

**21.** Procédé selon l'une quelconque des les revendications 14 à 20, **caractérisé en ce que** le chauffage des protéines dans la phase (ii) se fait à l'addition de sucre, par exemple 10% de sucre.

**22.** Utilisation d'une pâte selon l'une quelconque des revendications 1 à 13 pour la production de crêpes.

**23.** Utilisation d'une pâte selon l'une quelconque des revendications 1 à 13 pour la production de gaufres.

**24.** Utilisation d'une pâte selon l'une quelconque des revendications 1 à 13 pour la production de muffins.

**25.** Utilisation d'une pâte selon l'une quelconque des revendications 1 à 13 pour la production de gâteau éponge.

**26.** Utilisation d'une pâte selon l'une quelconque des revendications 1 à 13 pour la production de couches préfabriquées pour la génoise.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3970763 A
- WO 2004107866 A
- EP 1532862 A
- US 6391366 B
- GB 2145634 A